# EUROPÄISCHE PATENTSCHRIFT

(11) **EP 2 219 921 B1**
(45) Veröffentlichungstag und Bekanntmachung des Hinweises auf die Patenterteilung: **25.01.2012**
(21) Anmeldenummer: 08862759.1
(22) Anmeldetag: 02.12.2008
(51) Int. Cl.: B60W 10/10, B60W 20/00, B60W 30/18, B60K 6/387, B60K 6/48

(54) **Verfahren zum Betrieb eines Hybridantriebes eines Fahrzeuges**
Method for operating a hybrid drive of a vehicle
Procédé pour entraîner une propulsion hybride d'un véhicule

(30) Priorität: 17.12.2007 DE 102007055827
(43) Veröffentlichungstag der Anmeldung: 25.08.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, A-5163 Mattsee (AT)
(86) Internationale Anmeldenummer: PCT/EP2008/066597
(87) Internationale Veröffentlichungsnummer: WO 2009/077319

(56) Entgegenhaltungen:
- EP-A- 1 450 037
- WO-A-2007/102762
- DE-A1-102005 051 382

## Beschreibung

Die Erfindung betrifft ein Verfahren zum Betrieb eines Hybridfahrzeuges gemäß dem Oberbegriff des Patentanspruchs 1

Hybridabtriebe gewinnen im Fahrzeugbau aufgrund ihres Potenzials zur Verringerung von Schadstoffemissionen und Energieverbrauch zunehmend an Bedeutung. Derartige Fahrzeuge weisen verschiedenartige Antriebsquellen auf, wobei insbesondere Kombinationen von Verbrennungs- und Elektromotoren von Vorteil sind, da sie einerseits die Reichweiten- und Leistungsvorteile von Brennkraftmaschinen und andererseits die flexiblen Einsatzmöglichkeiten der elektrischen Maschinen als alleinige oder Hilfsantriebsquelle oder als Startergenerator sowie als Generator zur Stromerzeugung und Rekuperation nutzen können.

Vom Markt werden Hybrid-Antriebsstränge gefordert, die möglichst ohne zusätzlichen Bauraumbedarf, bei möglichst geringer Kompliziertheit und bei geringem Kosten- und Konstruktionsaufwand in Fahrzeuge implementiert werden können. Es werden grundsätzlich zwei Hybrid-Topologien, der Serienhybrid und der Parallelhybrid unterschieden. Solche Anordnungen sind bereits bekannt und werden ständig weiterentwickelt.

Beim Serienhybrid sind die Antriebsmaschinen hintereinander geschaltet. Dabei dient der Verbrennungsmotor, beispielsweise ein Dieselmotor, als Antrieb für einen Generator, der eine elektrische Maschine speist. Das Fahrzeug wird somit ausschließlich über die elektrische Maschine angetrieben. Der Verbrennungsmotor ist hingegen von den Antriebsrädern entkoppelt und kann daher ständig in einem einzigen Betriebspunkt, d.h. bei einem bestimmten Drehmoment und konstanter Drehzahl betrieben werden. Dieses Antriebskonzept eignet sich beispielsweise für Busse im städtischen Kurzstreckenverkehr, wobei vorzugsweise ein Betriebspunkt, bei dem der Wirkungsgrad des Verbrennungsmotors möglichst hoch ist und gleichzeitig Schadstoffemissionen, Kraftstoffverbrauch und Geräuschentwicklung in einem günstigen Bereich liegen, eingestellt wird. Ungünstig wirkt sich beim Serienhybrid dagegen aus, dass der Wirkungsgrad des Antriebs aufgrund der mechanisch-elektrischen Mehrfachumwandlung eingeschränkt ist.

Demgegenüber bieten Parallelhybrid-Antriebstränge durch eine bezüglich des Kraftflusses parallele Anordnung der Triebstrangaggregate neben der Überlagerung der Antriebsmomente, also einem gemischten Antrieb, auch die Möglichkeit der Ansteuerung mit rein verbrennungsmotorischem Antrieb oder rein elektromotorischem bzw. elektrischem Antrieb. Funktionell kann beim Parallelhybrid der Verbrennungsmotor durch jeweiliges Belasten bzw. Unterstützen mittels einer oder mehrerer elektrischer Maschinen weitgehend bei optimalem Drehmoment betrieben werden, so dass der maximale Wirkungsgrad des Verbrennungsmotors effektiv genutzt werden kann. Durch die elektrische Unterstützung des Verbrennungsmotors verringert sich im Mittel der Kraftstoffverbrauch. Da bei kurzzeitigen erhöhten Leistungsanforderungen im sogenannten Boostbetrieb, beispielsweise bei Überholvorgängen, eine Summierung der Antriebsleistung möglich ist, kann der Verbrennungsmotor nahezu ohne Einbußen an Leistung und Fahrkomfort des Fahrzeuges vergleichsweise kleiner sowie gewichts- und bauraumsparender ausgelegt werden, was sich zusätzlich emissionsverringernd und kostengünstig auswirkt. Die Elektromaschine kann zudem als integrierter Startergenerator (ISG) zum Start des Verbrennungsmotors über eine Kupplung fungieren. Weiterhin kann die Elektromaschine im generatorischen Betrieb zum Laden eines elektrischen Energiespeichers dienen und zur Rekuperation im Bremsbetrieb eingesetzt werden. Als Getriebe zur Variation der Übersetzung des Antriebes der angetriebenen Achsen kommen grundsätzlich alle Formen von Fahrzeuggetrieben in Betracht.

Bei einem Parallelhybrid-Antrieb kann im praktischen Fahrbetrieb abhängig von einer jeweiligen Hybrid-Betriebsstrategie die Antriebsform des Fahrzeuges zwischen verbrennungsmotorischem Antrieb, elektromotorischem Antrieb und gemischtem Antrieb häufig wechseln. Im rein elektrischen Fahrbetrieb ist die Elektromaschine mit dem Abtrieb verbunden, während der Verbrennungsmotor über ein Trennelement vom Antriebsstrang entgekoppelt ist. Soll die Elektromaschine in dieser Situation als integrierter Startergenerator den Verbrennungsmotor starten, so wird der Verbrennungsmotor über das Trennelement wieder zugeschaltet. Grundsätzlich kann ein solcher Motorstart sowohl während eines Übersetzungswechsels des Getriebes als auch außerhalb von Getriebeschaltvorgängen und sowohl mit als auch ohne Zugkraftunterbrechung erfolgen. Verschiedene geeignete Startmodi sind dazu in einer weiteren Patentanmeldung der Anmelderin beschrieben.

Die wechselnde Anbindung der Elektromaschine und des Verbrennungsmotors beim Parallelhybrid in den Antriebsstrang wird meist über Kupplungen realisiert. Dabei werden im Wesentlichen eine Zwei-Kupplungsanordnung (2K) und eine Ein-Kupplungsanordnung (1 K) unterschieden, wobei bei beiden Anordnungen die Elektromaschine als integrierter Startergenerator (2K-ISG bzw. 1 K-ISG - Anordnung) fungieren kann. Bei einem 2K-ISG - Antriebsstrang ist der Verbrennungsmotor über eine erste Kupplung mit der Elektromaschine verbindbar. Die Elektromaschine wiederum ist über eine separate zweite Kupplung mit einem Fahrzeuggetriebe koppelbar. Bei einem 1 K-ISG - Antriebsstrang entfällt hingegen eine zweite separate Kupplung zwischen der Elektromaschine und dem Getriebe bzw. dem Abtrieb. Die Elektromaschine kann dann direkt mit einem Getriebeeingang verbunden sein.

Die Funktion einer optionalen zweiten Kupplung zwischen der Elektromaschine und dem Abtrieb kann, soweit dies bei dem jeweiligen Antriebskonzept vorgesehen bzw. erforderlich ist, auch von gegebenenfalls vorhandenen getriebeinternen Schaltkupplungen und/oder Schaltbremsen, wie sie beispielsweise in Getriebeautomaten verbaut sind oder von einer gegebenenfalls antriebstechnisch vorgeschalteten Wandlerüberbrückungskupplung übernommen werden.

Zur Vervollständigung sei an dieser Stelle erwähnt, dass die Elektromaschine alternativ zu einer direkten Anordnung zwischen Verbrennungsmotor und Fahrzeuggetriebe bzw. einer direkten kraftschlüssigen Verbindung über eine Kupplung auch über ein geeignetes zusätzliches Getriebe, beispielsweise ein Planetengetriebe, in den Antriebsstrang eingekoppelt werden kann. Die Elektromaschine kann dann insbesondere als ein elektrodynamisches Anfahrelement (EDA) eingesetzt werden, wodurch eine herkömmliche Anfahrkupplung entfallen kann. Ein derartiges Hybrid-System mit einem EDA ist beispielsweise in Verbindung mit dem automatisierten AS Tronic-Getriebe aus dem Produktionsprogramm der Anmelderin bekannt und besonders vorteilhaft in Nutzfahrzeugen und Bussen im städtischen Verteilerverkehr bzw. in der Personenbeförderung mit häufigen Anfahr-, Brems und Rangiervorgängen einsetzbar.

Den Starts des Verbrennungsmotors aus elektrischer Fahrt kommt beim Hybridantrieb eine besondere Bedeutung zu, weil sie einerseits für den Fahrkomfort und anderseits für die Fahrdynamik beim Hybridantrieb maßgebend sind. Zudem spielen sie für die Wirtschaftlichkeit und den Wirkungsgrad des Hybridantriebs eine wichtige Rolle. Dabei können eine Schaltstrategie und eine Hybrid-Betriebsstrategie derart miteinander korreliert sein, dass relativ häufig eine Schaltanforderung mit einer Motorstartanforderung zusammenfällt, oder dass der Start des Verbrennungsmotors zweckmäßigerweise mit einem Gangwechsel verknüpft ist.

Aus der US 2005 022 1947 A1 ist ein Hybridantrieb mit einer Zwei-Kupplungsanordnung sowie einem Stufengetriebe bekannt. In dieser Druckschrift ist eine Start/Stopp-Funktion beschrieben, bei welcher der Verbrennungsmotor abgeschaltet und von einer elektrischen Maschine wieder gestartet wird. Bei einem Stopp-Schritt wird der Verbrennungsmotor über eine Steuerung beim Auftreten vorgegebener Stopp-Bedingungen, beispielsweise beim Langsamerwerden an einer Ampel oder im Kolonnenverkehr, über eine verbrennungsmotorseitige Kupplung vom Antriebsstrang getrennt und abgeschaltet. Beim darauf folgenden Start-Schritt treibt zunächst die Elektromaschine bei einer eingerückten ersten Getriebeübersetzung das Fahrzeug an. Anschließend wird über die Steuerung beim Auftreten vorgegebener Betriebszustände das Übersetzungsverhältnis geändert (erhöht), während gleichzeitig die Elektromaschine über die getriebeseitige Kupplung vom Getriebe getrennt wird und die verbrennungsmotorseitige Kupplung eingerückt wird, so dass der Verbrennungsmotor über die Elektromaschine gestartet wird. Nach erfolgtem Start wird der Verbrennungsmotor über die getriebeseitige Kupplung mit dem Getriebe verbunden, so dass der Verbrennungsmotor allein oder im Zusammenwirken mit der Elektromaschine das Fahrzeug antreibt. Komforteinschränkende Stoßbelastungen im Triebstrang durch den Startvorgang können weitgehend vermieden werden, da der Abtrieb beim Motorstart über die zweite Kupplung vom Verbrennungsmotor getrennt ist.

Nachteilig daran ist die komplexe Steuerung, insbesondere zur Koordinierung der beiden Kupplungen, die in kurzer Abfolge oder teilweise gleichzeitig zu schalten sind. Aufgrund veränderlicher Einflüsse, beispielsweise Temperaturschwankungen im Getriebe und Verschleißzustand der Kupplungen oder dem Spiel von Bauteilen in der mechanischen Übertragungskette im Triebstang sowie durch Abhängigkeiten von aktuellen Betriebszuständen des Fahrzeuges, beispielsweise Beschleunigung oder Fahrbahnsteigung, benötigt die bekannte Steuerung eine relativ aufwendige Regelung und Sensorik, um einen einwandfreien Hybridbetrieb zu gewährleisten.

In der DE 10 2005 051 382 A1 ist ein Startvorgang zum Starten des Verbrennungsmotors bei einer Ein-Kupplungsanordnung beschrieben, wobei das Getriebe vorzugsweise als ein Lastschaltautomat, also ein die Zugkraft des Antriebsstranges erhaltendes schaltendes Getriebe ausgebildet ist. Die eine Kupplung kann als eine reibschlüssige oder im einfachsten Fall als eine besonders kostengünstige und bauraumsparende formschlüssige Trennkupplung ausgebildet sein. Zum Starten des Verbrennungsmotors befindet sich das Getriebe zunächst in einer Neutralstellung bzw. wird in Neutral geschaltet. In der Neutralstellung des Getriebes wird die zuvor offene Kupplung in Schließrichtung angesteuert, so dass die Elektromaschine ein positives Drehmoment auf den Verbrennungsmotor in dessen vorgesehener Drehrichtung ausübt und dieser angelassen wird. Durch die Neutralstellung des Getriebes ist der Verbrennungsmotor beim Startvorgang vom Abtrieb des Getriebes entkoppelt, so dass motorstartbedingte Stoßbelastungen im Triebstrang vermieden werden, wodurch der Startvorgang während des Gangwechsels relativ komfortabel abläuft. Ist anschließend ein rein elektrischer Antrieb durch die Elektromaschine gewünscht, beispielsweise für einen Anfahrvorgang bei einem Start/Stopp-Betrieb, kann die Kupplung wieder vollständig geöffnet und die Drehzahl der Elektromaschine auf eine entsprechende Anschlussdrehzahl des einzulegenden Ganges, beispielsweise des 1.Ganges, geregelt werden, während der Verbrennungsmotor lastfrei im Leerlauf läuft.

Diese Druckschrift zeigt eine Möglichkeit zum komfortablen Start des Verbrennungsmotors mittels einer Elektromaschine in einem Hybridantrieb mit nur einer Kupplung, wodurch sich der Steuerungsaufwand signifikant vereinfacht. Sie ist somit in der Lage, die ihr zugrunde liegende Aufgabe vollständig zu erfüllen. Schwerpunkt dabei ist ein automatischer Startvorgang innerhalb eines Start/Stopp-Systems. Der Fachmann findet darin jedoch keine expliziten Hinweise auf den Startablauf des Verbrennungsmotors aus einer elektrischen Fahrt während eines Gangwechsels mit einem zugkraftunterbrechend schaltenden automatisierten Getriebe.

Bei einem solchen Hybrid-Antriebsstrang mit einem zugkraftunterbrechend schaltenden automatisierten Schaltgetriebe in einer Ein-KupplungsAnordnung ist es zweckmäßig und vorteilhaft, den Verbrennungsmotor bevorzugt in der zugkraftunterbrochenen Schaltpause beim Gangwechsel zu starten. Dabei treten jedoch in kurzer Abfolge wechselnde dynamische Zustände auf, wodurch unter Umständen Steuerungsprobleme entstehen können und eine erhöhte Störanfälligkeit nicht ohne weiteres auszuschließen ist.

Insbesondere sind bei einem derartigen kombinierten Start-/ Schaltvorgang folgende Maßnahmen zu koordinieren:

Der Motorstart kann erst ab dem Zeitpunkt eingeleitet werden, ab dem das Getriebe in Neutral geschaltet ist beziehungsweise keine Zugkraft mehr weiterleitet. Weiterhin muss ein Antriebsdrehmoment, welches ein den Stellorganen zum Auslegen des Ganges entgegenwirkendes Drehmoment verursacht, abgesenkt werden, um den aktuell eingelegten Gang auslegen zu können. Eine Schaltzeit des Getriebes, eine Startzeit des Verbrennungsmotors, eine notwendige Startdrehzahl sowie die gegebenenfalls verschiedenen Drehzahlverläufe von Verbrennungsmotor, Elektromaschine und Getriebe sind außerdem zu berücksichtigen. Vor dem Einrücken einer vorgesehenen Anschlussübersetzung nach dem Start des Verbrennungsmotors muss schließlich der Getriebeeingang auf eine Anschlussdrehzahl des neuen Gangs synchronisiert werden.

Die WO 2007/102762 A1 offenbart ein Verfahren nach dem Oberbegriff des Anspruchs 1.

Vor diesem Hintergrund liegt der Erfindung die Aufgabe zugrunde, ein Verfahren und eine Vorrichtung zum Betrieb eines Hybridantriebes mit einem Verbrennungsmotor, einer elektrischen Maschine und einem automatisierten Schaltgetriebe anzugeben, die auf möglichst einfache und komfortable Weise den Start des Verbrennungsmotors während Schaltvorgängen im elektrischen Fahrbetrieb sowie dessen Einkopplung in den Antriebsstrang ermöglichen, und dennoch eine hohe Zuverlässigkeit sowie Störsicherheit des Hybridantriebes gewährleisten.

Die Lösung dieser Aufgabe ergibt sich aus den Merkmalen der unabhängigen Patentansprüche, während vorteilhafte Ausgestaltungen und Weiterbildungen der Erfindung den Unteransprüchen entnehmbar sind.

Der Erfindung liegt die Erkenntnis zugrunde, dass in einem Parallelhybrid-Antriebsstrang bei einem kombinierten Start-/Schaltablauf zum Start des Verbrennungsmotors bei elektrischer Fahrt und zur Durchführung eines Gangwechsels mit Zugkraftunterbrechung, durch ein koordiniertes Aufrufen der einzelnen durchzuführenden Funktionen, wobei jeweils definierte Zwischenzustände erreicht werden, ein besonders robuster und störsicherer Hybridantrieb ermöglicht wird.

Gemäß den Merkmalen des Anspruchs 1 geht die Erfindung aus von einem Verfahren nach dem Oberbegriff des Anspruchs 1.

Unter einem automatisierten Schaltgetriebe wird ein Getriebe mit zugkraftunterbrochenen Schaltvorgängen verstanden, wobei entsprechende Stellorgane zum Ein- und Ausrücken der Übersetzungsstufen automatisch ansteuerbar sind.

Unter einem Schaltelement zur Verbindung von Verbrennungsmotor und Elektromaschine werden all Arten von automatisch ansteuerbaren Stellorganen verstanden, über die der Verbrennungsmotor und die Elektromaschine koppelbar sind. Dies kann beispielsweise eine elektro-hydraulisch oder elektro-pneumatisch betätigbare reibschlüssige Anfahr- oder Trennkupplung sein.

Unter einem Gangwechsel eines automatisierten Schaltgetriebes wird ein zugkraftunterbrochener Schaltvorgang verstanden, bei dem eine Ursprungsgangstufe ausgelegt und eine Zielgangstufe eingelegt wird. Grundsätzlich schließt dies auch den Spezialfall einer Getriebebetätigung ein, bei der eine Ursprungsgangstufe (eingelegter Gang) und eine Zielgangstufe (einzulegender Gang) gleich sind, welches bedeutet, dass zwar eine Schaltung erfolgt, jedoch keine Übersetzungsänderung.

Grundsätzlich ist die Erfindung bei allen Arten von Fahrzeugen mit derartigen Parallelhybrid-Antriebssträngen einsetzbar.

Zur Lösung der gestellten Aufgabe sieht die Erfindung ein Verfahren nach dem Anspruch 1 vor.

Dadurch, dass die einzelnen Funktionsbefehle sequenziell mit definierten Zwischenzuständen aufgerufen werden, können die verschiedenen dynamischen Zustände bei einem gleichzeitigen Motorstart und Gangwechsel sicher und zuverlässig koordiniert werden, so dass in jeder Fahrsituation ein einwandfreies Umschalten zwischen den Betriebsarten des Parallelhybridantriebs in Verbindung mit den Übersetzungswechseln im Fahrbetrieb sichergestellt ist. Solche komplizierten und sensitiven Wechselwirkungen verschiedener Triebstrangkomponenten mit sich ändernden dynamischen und kinetischen Beziehungen in kurzer zeitlicher Abfolge, die aufgrund äußerer Einflüsse schwer berechenbar sowie kaum vorausbestimmbar sind und daher eine relativ hohe Störanfälligkeit verursachen können, werden verfahrensgemäß weitgehend vermieden oder zumindest erheblich verringert, so dass ein robustes, relativ einfach steuerbares Hybridsystem zur Verfügung gestellt werden kann.

Dabei ist eine Aufteilung der einzelnen Funktionen auf eine Hybridsteuereinheit und eine Getriebesteuereinheit innerhalb einer Steuerungseinrichtung, die mit einer Strategieeinheit kommuniziert, besonders vorteilhaft. Insbesondere lassen sich dabei die Abläufe relativ einfach zerlegen und in wieder verwendbaren Einzelfunktionen softwarebezogen darstellen, wobei die Einzelfunktionen je nach Sequenz wiederholt aufgerufen werden. Dadurch kann der relativ komplexe Funktionsablauf bei einem kombinierten Motorstart / Gangwechsel signifikant vereinfacht werden.

Erfindungsgemäß wird in jedem relevanten Sequenzabschnitt der Steuerung eine jeweilige Schaltstellung des Schaltelementes zur Einkopplung des Verbrennungsmotors in den Antriebsstrang sichergestellt bzw. geregelt. Zum einen erfolgt der Motorstart bei einem Gangwechsel definitiv in der Schaltpause, wodurch Störungen im Antriebsstrang durch den Motorstart sicher vermieden werden können. Zum anderen hat es sich bei dem erfindungsgemäßen Steuerungsablauf als besonders vorteilhaft herausgestellt, dass im Anschluss an den Motorstart die notwendige Synchronisierung des Getriebeeingangs variabel gehandhabt werden kann. Dabei können entweder von vornherein bei laufendem Verbrennungsmotor die Elektromaschine und der Verbrennungsmotor im Block umlaufen bzw. synchronisationswirksam betrieben werden, oder die Elektromaschine nimmt zunächst allein die Synchronisierung vor und der Verbrennungsmotor wird, soweit angefordert, erst nach Abschluss der Schaltung angekoppelt bzw. zugeschaltet.

Dazu sei eine Fahrsituation gegeben, in der das Fahrzeug mit rein elektromotorischem Antrieb fährt, also bei offenem Schaltelement und stehendem Verbrennungsmotor. Eine Hybrid-Betriebsstrategie gibt dann den Befehl aus, dass der Verbrennungsmotor gestartet werden soll, beispielsweise bei niedrigem Ladezustand eines Antriebsenergiespeichers, niedriger elektrischer Antriebsmomentreserve, erhöhter Leistungsanforderung etc. Die Startanforderung zum Starten des Verbrennungsmotors kann auch direkt über den Fahrer erfolgen, beispielsweise wenn er es aus der von ihm wahrgenommenen Fahrsituation heraus für zweckmäßig oder wünschenswert hält und dies über ein geeignetes Betätigungsorgan sowie einen zugeordneten Sensor entsprechend signalisiert. Als eine Startbedingung ist eine Mindeststartdrehzahl der elektrischen Maschine festgelegt, die zum Starten des Verbrennungsmotors erforderlich ist. Die Startanforderung falle mit einem durch eine Schaltstrategie initiierten Gangwechsel zusammen.

Bei der Durchführung einer ersten Ausführungsform des Verfahrens wird zum Starten des Verbrennungsmotors das Schaltelement geschlossen und die Synchronisierung des Getriebeeingangs erfolgt nach dem Start des Verbrennungsmotors bei geschlossenem Schaltelement mittels dem Verbrennungsmotor und der Elektromaschine gemeinsam.

Demnach kann bei einer Startanforderung zum Starten des Verbrennungsmotors und einer gleichzeitigen oder weitgehend gleichzeitigen Schaltanforderung zum Schalten des Getriebes bei einer elektrischen Fahrt folgende Funktionssequenz, mit einer Synchronisierung des Getriebeeingangs nach erfolgtem Motorstart bei geschlossenem Schaltelement, vorgesehen sein, wobei nach jedem einzelnen Schritt ein definierter Zwischenzustand erreicht wird:
- Drehmoment abbauen,
- Sicherstellung, dass das Schaltelement offen ist,
- Ursprungsgang bei geöffnetem Schaltelement auslegen,
- Verbrennungsmotor bei geschlossenem Schaltelement mittels einem Schwungstart starten,
- Getriebeeingang synchronisieren,
- Zielgang einlegen.

Ein Drehmomentabbau im Antriebsstrang bei elektrischer Fahrt ist zur Vorbereitung eines Übersetzungswechsels des Getriebes notwendig, um einen eingelegten Gang auslegen zu können. Erfindungsgemäß ist ein Drehmomentabbau möglich, der bei einem als Reibkupplung ausgebildetem Schaltelement mittels einer temporären Teilschließung des Schaltelementes durchgeführt oder unterstützt wird, wobei das Schaltelement nach erfolgtem Drehmomentabbau wieder vollständig geöffnet wird.

Bei einem darauf folgenden Schwungstart wird zunächst bei geöffnetem Schaltelement an der Elektromaschine eine vorgegebene Mindeststartdrehzahl eingestellt oder eine aktuelle Drehzahl oberhalb der Mindeststartdrehzahl gehalten, dann wird das Schaltelement geschlossen und schließlich wird der Verbrennungsmotor bei Erreichen der Mindeststartdrehzahl (mit entsprechender Kraftstoffzufuhr und Kraftstoffzündung) gestartet.

Bei der Durchführung einer zweiten Variante des Verfahrens wird zum Starten des Verbrennungsmotors das Schaltelement geschlossen sowie nach erfolgtem Motorstart wieder geöffnet, und die Synchronisierung des Getriebes erfolgt bei offenem Schaltelement mittels der Elektromaschine.

Demnach kann bei einer Startanforderung zum Starten des Verbrennungsmotors und einer gleichzeitigen oder im wesentlichen gleichzeitigen Schaltanforderung zum Schalten des Getriebes bei einer elektrischen Fahrt folgende Funktionssequenz, mit einer Synchronisierung des Getriebes bei offenem Schaltelement, vorgesehen sein, wobei nach jedem einzelnen Schritt ein definierter Zwischenzustand erreicht wird:
- Drehmoment abbauen,
- Sicherstellung, dass das Schaltelement offen ist,
- Ursprungsgang bei geöffnetem Schaltelement auslegen,
- Verbrennungsmotor bei geschlossenem Schaltelement mittels einem Schwungstart starten,
- Schaltelement öffnen,
- Getriebeeingang synchronisieren,
- Zielgang einlegen,
- Schaltelement schließen.

Diese Variante ist auch bei einem Anfahrvorgang vorteilhaft einsetzbar, wobei bei in einer Getriebeneutralstellung stehendem Fahrzeug folgende Funktionssequenz, mit einer Synchronisierung des Getriebes bei offenem Schaltelement, vorgesehen sein kann:
- Verbrennungsmotor bei geschlossenem Schaltelement mittels einem Direktstart starten,
- Schaltelement öffnen,
- Getriebeeingang synchronisieren,
- Zielgang einlegen,
- Schaltelement schließen.

Bei einem solchen Direktstart wird das Schaltelement bei stehender oder mit einer Drehzahl unterhalb einer Mindeststartdrehzahl drehender Elektromaschine geschlossen, dann wird bei geschlossenem Schaltelement der Verbrennungsmotor über die Elektromaschine auf die vorgegebene Mindeststartdrehzahl beschleunigt und schließlich wird der Verbrennungsmotor bei Erreichen der Mindeststartdrehzahl gestartet.

Zur Verdeutlichung der Erfindung ist der Beschreibung eine Zeichnung eines Ausführungsbeispiels beigefügt. Die einzige Figur zeigt eine schematische Darstellung eines Hybridantriebes eines Fahrzeuges zu Durchführung eines erfindungsgemäßen Betriebsverfahrens.

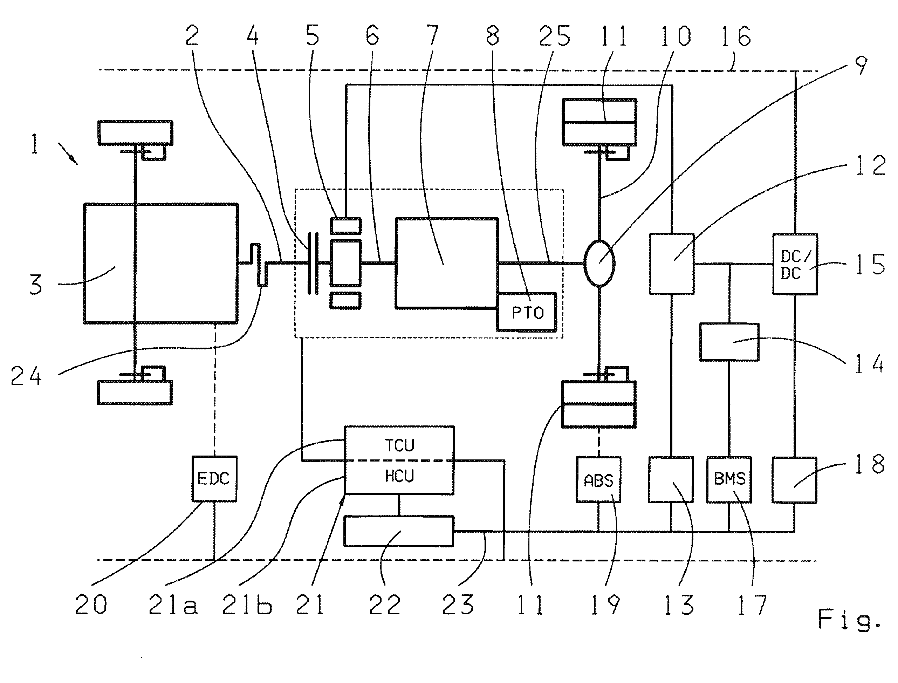

Demnach ist ein Schema eines Fahrzeug-Hybridantriebes 1 mit einem Parallelhybrid - Antriebsstrang 2 dargestellt, wie er beispielsweise für ein Nutzfahrzeug (Lkw, Bus, Transporter, Sonderfahrzeug) vorgesehen sein kann. Der Antriebsstrang 2 weist einen Verbrennungsmotor 3, beispielsweise einen Dieselmotor, mit einer Kurbelwelle 24 auf, die über ein Schaltelement 4 mit einer elektrischen Maschine 5 verbindbar ist. Die elektrische Maschine 5 ist über einen Getriebeeingang 6 mit einem automatisierten Schaltgetriebe 7 gekoppelt. Der in Fig. 1 dargestellte Antriebsstrang 2 ist somit als eine 1 K-ISG - Anordnung ausgebildet, d.h. mit einer Trenn- oder Anfahrkupplung als Schaltelement 4 zur Ankopplung des Verbrennungsmotors 3 an den Antriebsstrang 2 und zur Verbindung mit der elektrischen Maschine 5. Ein zweites separates Schaltelement zwischen der elektrischen Maschine 5 und dem Getriebe 7 entfällt. Dem Getriebe 7 kann ein nicht näher erläuterter Nebenabtrieb (PTO: Power Take-Off) 8 nachgeordnet sein. Über einen Abtrieb 25 und ein Differenzial 9 kann ein jeweils anliegendes Abtriebsdrehmoment des Hybridantriebes 1 an eine Antriebsachse 10 und über diese an die Antriebsräder 11 weitergeleitet werden.

Die Elektromaschine 5 kann je nach Betriebssituation als elektrisches Antriebsaggregat oder als Generator betrieben werden. Dazu ist sie mit einem Umrichter 12 verbunden, der von einem Umrichter-Steuergerät 13 ansteuerbar ist. Über den Umrichter 12 ist die Elektromaschine 5 mit einem elektrischen Antriebsenergiespeicher 14, beispielsweise einer 340 V-Hochvolt-Batterie (auch Supercaps sind möglich), verbunden. Im elektromotorischen Betrieb wird die Elektromaschine 5 vom Energiespeicher 14 gespeist. Im generatorischen Betrieb, also beim Antrieb durch den Verbrennungsmotor 3 und/oder im Rekuperationsbetrieb, wird der Energiespeicher 14 durch die Elektromaschine 5 aufgeladen. Weiterhin fungiert die Elektromaschine 5 als integrierter Startergenerator (ISG) zum Starten des Verbrennungsmotors 3. Der Hochvoltkreis des Energiespeichers 14 bzw. die daran angeschlossenen Steuergeräte sind über einen bidirektionalen Gleichspannungswandler (DC/DC) 15 an ein Bordnetz (24V oder 12V) 16 angeschlossen. Der Energiespeicher 14 ist mittels eines Batteriemanagementsystems (BMS) 17 bezüglich seines Ladezustandes (SOC: State of Charge) überwachbar und regelbar. Der Gleichspannungswandler 15 ist von einem Gleichspannungswandler-Steuergerät 18 ansteuerbar. Zudem ist ein Steuergerät 19 für nicht näher erläuterte Bremsregelungsfunktionen, insbesondere ein Antiblockiersystem (ABS) bzw. ein elektronisches Bremssystem (EBS) sowie ein weiteres Steuergerät 20 für eine elektronische Dieselregelung (EDC) des beispielhaft als Dieselmotor ausgebildeten Verbrennungsmotors 3 vorhanden. Die einzelnen genannten Steuergeräte können auch, wenigstens zum Teil, in einem Steuergerät zusammengefasst sein.

Weiterhin ist eine erfindungsgemäße Steuerungseinrichtung 21 angeordnet, in der eine Getriebesteuereinheit 21 a (TCU: Transmission Control Unit) und eine Hybridsteuereinheit 21 b (HCU: Hybrid Control Unit) zur Steuerung der Triebstrangkomponenten integriert sind. Die Steuerungseinrichtung 21 weist Funktionssequenzen in Form von Steuerungs- und/oder Regelungsprogrammen zur koordinierten Durchführung von Motorstarts und Gangwechseln auf. Insbesondere sind in der Getriebesteuereinheit 21 a und der Hybridsteuereinheit 21 b eine Anzahl von Einzelfunktionen abgespeichert, aus denen die Funktionssequenzen zusammenstellbar sind. Zur Regelung der Antriebsenergieverteilung bzw. Zu- und Abschaltung der Antriebsaggregate 3, 5 ist weiterhin eine zentrale Strategieeinheit 22 vorhanden, die über einen Datenbus 23, beispielsweise einen CAN-Bus, mit der Steuerungseinrichtung 21 und den relevanten Steuergeräten 13, 17, 18, 19 verbunden ist und kommuniziert.

Ein erfindungsgemäßes Verfahren zum Starten des Verbrennungsmotors 3 bei zugkraftunterbrochenem Getriebe 7, welches mit dem Hybridantrieb 1 durchführbar ist, beruht auf einem Ablauf, bei dem die einzelnen nötigen Funktionen in einer Sequenz koordiniert aufgerufen werden, wobei nach jedem einzelnen Schritt ein definierter Zwischenzustand erreicht wird.

Bei einer ersten Variante wird bei elektrischer Fahrt zunächst das Drehmoment am Getriebeeingang 6 durch eine entsprechende Ansteuerung der Elektromaschine 5 abgebaut. Anschließend wird durch die Versendung entsprechender Steuerbefehle sichergestellt, dass das Schaltelement 4 geöffnet und der eingelegte Gang ausgelegt ist, wobei an einem bestimmten Speicherplatz der Steuerungseinrichtung 21 ein Bit für den Zustand "Getriebe öffnen" gesetzt wird. Im nächsten Schritt wird der Verbrennungsmotor 3 über einen Schwungsstart angelassen. Dazu wird die Elektromaschine 5 erst auf eine vorgegebene Mindeststartdrehzahl beschleunigt und dann das Schaltelement 4 geschlossen. Bei Erreichen der Mindeststartdrehzahl und entsprechender Kraftstoffeinspritzung startet der Verbrennungsmotor 3. Die Abtriebswellen des Verbrennungsmotors 3 und der Elektromaschine 5 laufen nun bei weiterhin geschlossenem Schaltelement 4 im Block um und synchronisieren den Getriebeeingang 6 mittels einer korrelierten Drehzahlregelung auf eine Anschlussdrehzahl für einen einzulegenden Zielgang. Nach erfolgter Synchronisierung wird der Zielgang eingelegt. Die Funktionssequenz ist damit abgeschlossen.

Bei einer zweiten Variante des Verfahrens gemäß der Erfindung wird nach dem Starten des Verbrennungsmotors 3 das Schaltelement 4 zunächst wieder geöffnet, so dass der Getriebeeingang 6 nur mit der Elektromaschine 5 gekoppelt ist. Anschließend wird die Synchronisierung des Getriebeeingangs 6 auf die Anschlussdrehzahl des Zielgangs durch die Elektromaschine 5 vorgenommen und bei deren Erreichen der Zielgang eingelegt. Das Fahrzeug kann nun bei im Leerlauf lastfrei betriebenem Verbrennungsmotor 3 rein elektrisch angetrieben werden. Wenn der Verbrennungsmotor 3 zugeschaltet werden soll, wird dessen Drehzahl entsprechend angepasst und das Schaltelement 4 unmittelbar nach dem Einlegen des Zielgangs, also nach Abschluss der Schaltung oder zu einem anderen gewünschten Zeitpunkt geschlossen.

### Bezugszeichenliste

- 1: Hybridantrieb
- 2: Antriebsstrang
- 3: Verbrennungsmotor
- 4: Schaltelement
- 5: Elektrische Maschine
- 6: Getriebeeingang
- 7: Getriebe
- 8: Nebenabtrieb
- 9: Differenzial
- 10: Antriebsachse
- 11: Fahrzeugrad
- 12: Umrichter
- 13: Umrichter-Steuergerät
- 14: Elektrischer Antriebsenergiespeicher
- 15: Gleichspannungswandler
- 16: Bordnetz
- 17: Batteriemanagementsystem
- 18: Spannungswandler-Steuergerät
- 19: Elektronische Bremsregelung
- 20: Elektronische Dieselregelung
- 21: Steuerungseinrichtung
- 21 a: Getriebesteuereinheit
- 21 b: Hybridsteuereinheit
- 22: Strategieeinheit
- 23: Datenbus
- 24: Kurbelwelle
- 25: Abtrieb
- ABS: Antiblockiersystem
- BMS: Batterie-Management-System
- DC/DC: Gleichspannungswandler (Direct Current)
- EBS: Elektronisches Bremssystem (Electronic Brake System)
- EDC: Elektronische Dieselregelung (Electronic Diesel Control)
- HCU: Hybridsteuerung (Hybrid Control Unit)
- TCU: Getriebesteuerung (Transmission Control Unit)
- PTO: Nebenabtrieb (Power Take-Off)

## Patentansprüche

1. Verfahren zum Betrieb eines Hybridantriebes (1) eines Fahrzeuges, mit einem einen Parallelhybrid-Antriebsstrang (2) umfassend einen Verbrennungsmotor (3), wenigstens eine Elektromaschine (5), ein zwischen dem Verbrennungsmotor (3) und der Elektromaschine (5) angeordnetes Schaltelement (4), ein zugkraftunterbrechend schaltendes automatisiertes Getriebe (7) und einen Abtrieb (25), wobei der Verbrennungsmotor (3) über das Schaltelement (4) mit der Elektromaschine (5) kraftschlüssig verbindbar und mittels der Elektromaschine (5) startbar ist, wobei bei einer Startanforderung zum Starten des Verbrennungsmotors (3) bei zugkraftunterbrochenem Getriebe (7), eine koordinierte Sequenz von Funktionen mit definierten Zwischenzuständen aufgerufen wird, wobei ein Schaltzustand des Schaltelementes (4) zur wahlweise rein elektromotorischen oder elektromotorisch-verbrennungsmotorisch kombinierten Synchronisierung eines Getriebeeingangs (6) des Getriebes (7) auf eine Ziel-Getriebeeingangsdrehzahl im Anschluss an den erfolgten Motorstart variiert wird, **dadurch gekennzeichnet, dass**
ein Drehmomentabbau im Antriebsstrang (2) zur Vorbereitung eines Übersetzungswechsels des Getriebes (7) bei elektrischer Fahrt mit Hilfe einer temporären Teilschließung des Schaltelementes (4) erfolgt oder durch eine temporäre Teilschließung des Schaltelementes (4) unterstützt wird, und
das Schaltelement (4) nach erfolgtem Drehmomentabbau wieder geöffnet wird.

2. Verfahren nach Anspruch 1, **dadurch gekennzeichnet, dass** zum Starten des Verbrennungsmotors (3) das Schaltelement (4) geschlossen wird und die Synchronisierung des Getriebeeingangs (6) nach erfolgtem Motorstart bei geschlossenem Schaltelement (4) über den Verbrennungsmotor (3) und die Elektromaschine (5) gemeinsam erfolgt.

3. Verfahren nach Anspruch 1 und 2, dadurch **gekennzeich**n e t , dass bei einer Startanforderung zum Starten des Verbrennungsmotors (3) und einer gleichzeitigen oder weitgehend gleichzeitigen Schaltanforderung zum Schalten des Getriebes (7) bei einer elektrischen Fahrt folgende Funktionssequenz, mit einer Synchronisierung des Getriebeeingangs (6) nach erfolgtem Motorstart bei geschlossenem Schaltelement (4), vorgesehen ist, wobei nach jedem einzelnen Schritt ein definierter Zwischenzustand erreicht wird:
- Drehmoment abbauen,
- Sicherstellung, dass das Schaltelement (4) offen ist,
- Ursprungsgang bei geöffnetem Schaltelement (4) auslegen,
- Verbrennungsmotor (3) bei geschlossenem Schaltelement mittels einem Schwungstart starten,
- Getriebeeingang (6) synchronisieren,
- Zielgang einlegen.

4. Verfahren nach Anspruch 1, **dadurch gekennzeichnet, dass** zum Starten des Verbrennungsmotors (3) das Schaltelement (4) geschlossen und nach erfolgtem Motorstart wieder geöffnet wird, und dass die Synchronisierung des Getriebes (7) bei offenem Schaltelement (4) mittels der Elektromaschine (5) erfolgt.

5. Verfahren nach Anspruch 1 und 4, dadurch **gekennzeich**n e t , dass bei einer Startanforderung zum Starten des Verbrennungsmotors (3) und einer gleichzeitigen oder weitgehend gleichzeitigen Schaltanforderung zum Schalten des Getriebes (7) bei einer elektrischen Fahrt folgende Funktionssequenz, mit einer Synchronisierung des Getriebes (7) bei offenem Schaltelement (4), vorgesehen ist, wobei nach jedem einzelnen Schritt ein definierter Zwischenzustand erreicht wird:
- Drehmoment abbauen,
- Sicherstellung, dass das Schaltelement (4) offen ist,
- Ursprungsgang bei geöffnetem Schaltelement (4) auslegen,
- Verbrennungsmotor (3) bei geschlossenem Schaltelement mittels einem Schwungstart starten,
- Schaltelement (4) öffnen,
- Getriebeeingang (6) synchronisieren,
- Zielgang einlegen,
- Schaltelement (4) schließen.

6. Verfahren nach Anspruch 1 und 4, **dadurch gekennzeichnet , dass** bei einer Startanforderung zum Starten des Verbrennungsmotors (3) bei einem Anfahrvorgang bei in einer Getriebeneutralstellung stehendem Fahrzeug folgende Funktionssequenz, mit einer Synchronisierung des Getriebes (7) bei offenem Schaltelement (4), vorgesehen ist, wobei nach jedem einzelnen Schritt ein definierter Zwischenzustand erreicht wird:
- Verbrennungsmotor (3) bei geschlossenem Schaltelement mittels einem Direktstart starten,
- Schaltelement (4) öffnen,
- Getriebeeingang (6) synchronisieren,
- Zielgang einlegen,
- Schaltelement (4) schließen.

7. Verfahren nach einem der Ansprüche 1 bis 6, **dadurch gekennzeichnet, dass** bei einem Schwungstart zunächst bei geöffnetem Schaltelement (4) an der Elektromaschine (5) eine vorgegebene Mindeststartdrehzahl eingestellt oder eine aktuelle Drehzahl oberhalb der Mindeststartdrehzahl gehalten wird, dann das Schaltelement (4) geschlossen wird, und schließlich der Verbrennungsmotor (3) bei Erreichen der Mindeststartdrehzahl gestartet wird.

8. Verfahren nach einem der Ansprüche 1 bis 7, **dadurch gekennzeichnet, dass** bei einem Direktstart das Schaltelement (4) bei stehender oder mit einer Drehzahl unterhalb einer Mindeststartdrehzahl drehender Elektromaschine (5) geschlossen wird, dann bei geschlossenem Schaltelement (4) der Verbrennungsmotor (3) über die Elektromaschine (5) auf die vorgegebene Mindeststartdrehzahl beschleunigt wird, und schließlich der Verbrennungsmotor (3) bei Erreichen der Mindeststartdrehzahl gestartet wird.

## Claims

1. Method for operating a hybrid drive (1) of a vehicle, having a parallel hybrid drive train (2) comprising an internal combustion engine (3), at least an electric machine (5), a shifting element (4) arranged between the internal combustion engine (3) and the electric machine (5), an automated transmission (7) which shifts in a way which interrupts the tractive force, and an output (25), wherein the internal combustion engine (3) can be connected in a frictionally locking fashion to the electric machine (5) via the shifting element (4) and can be started by means of the electric machine (5), wherein in the event of a start request to start the internal combustion engine (3) when the transmission (7) has interrupted tractive force, a coordinated sequence of functions with defined intermediate states is called, wherein a switched state of the shifting element (4) for optionally purely electric motor or electric motor/internal combustion engine-combined synchronization of a transmission input (6) of the transmission (7) to a target transmission input rotational speed subsequent to the occurrence of the start of the engine is varied, **characterized in that** a torque reduction in the drive train (2) for preparing a transmission ratio changeover of the transmission (7) in the case of electric travel is carried out using temporary partial closure of the shifting element (4) or is assisted by temporary partial closure of the shifting element (4), and
the shifting element (4) is opened again after the torque has been reduced.

2. Method according to Claim 1, **characterized in that** in order to start the internal combustion engine (3) the shifting element (4) is closed and the synchronization of the transmission input (6) is carried out jointly by means of the internal combustion engine (3) and the electric machine (5) with the shifting element (4) closed after the engine has started.

3. Method according to Claims 1 and 2, **characterized in that** in the event of a start request to start the internal combustion engine (3) and a simultaneous or largely simultaneous shifting request to shift the transmission (7) in the case of electric travel, the following function sequence with synchronization of the transmission input (6) with the shifting element (4) closed after the engine has started is provided, wherein after each individual step a defined intermediate state is reached:
- reducing the torque,
- ensuring that the shifting element (4) is open,
- disengaging the original gear speed with the shifting element (4) opened,
- starting the internal combustion engine (3) by means of a push start with the shifting element closed,
- synchronizing the transmission input (6),
- engaging the target gear speed.

4. Method according to Claim 1, **characterized in that** in order to start the internal combustion engine (3) the shifting element (4) is closed and is opened again after the engine has started, and **in that** the synchronization of the transmission (7) is carried out by means of the electric machine (5) with the shifting element (4) open.

5. Method according to Claims 1 and 4, **characterized in that** in the event of a start request to start the internal combustion engine (3) and a simultaneous or largely simultaneous shifting request to shift the transmission (7) in the case of electric travel, the following function sequence with synchronization of the transmission (7) with the shifting element (4) opened is provided, wherein after each individual step a defined intermediate state is reached:
- reducing the torque,
- ensuring that the shifting element (4) is open,
- disengaging the original gear speed with the shifting element (4) opened,
- starting the internal combustion engine (3) by means of a push start with the shifting element closed,
- opening the shifting element (4),
- synchronizing the transmission input (6),
- engaging the target gear speed,
- closing the shifting element (4).

6. Method according to Claims 1 and 4, **characterized in that** in the case of a start request for starting the internal combustion engine (3) in the case of a starting process when the vehicle is stationary in a neutral position of the transmission, the following functional sequence with synchronization of the transmission (7) when the shifting element (4) is open is provided, wherein after each individual step a defined intermediate state is reached:
- starting the internal combustion engine (3) by means of a direct start with the shifting element closed,
- opening the shifting element (4),
- synchronizing the transmission input (6),
- engaging the target gear speed,
- closing the shifting element (4).

7. Method according to one of Claims 1 to 6, **characterized in that** in the case of a push start, a predefined minimum starting rotational speed is firstly set at the electric machine (5) with the shifting element (4) opened or a current rotational speed is kept above the minimum starting rotational speed and then the shifting element (4) is closed, and finally the internal combustion engine (3) is started when the minimum starting rotational speed is reached.

8. Method according to one of Claims 1 to 7, **characterized in that** in the case of a direct start, the shifting element (4) is closed when the electric machine (5) is stationary or is rotating at a rotational speed below a minimum starting rotational speed, and then the internal combustion engine (3) is accelerated to the predefined minimum starting rotational speed by means of the electric machine (5) with the shifting element (4) closed, and finally the internal combustion engine (3) is started when the minimum starting rotational speed is reached.

## Revendications

1. Procédé d'exploitation d'un groupe propulseur hybride (1) d'un véhicule, comprenant une chaîne motrice hybride parallèle (2) incluant un moteur à combustion (3), au moins une machine électrique (5), un élément de commutation (4) disposé entre le moteur à combustion (3) et la machine électrique (5), une boîte de vitesses automatisée (7) à changement de rapport interrompant la force de traction et une prise de force (25), le moteur à combustion (3) pouvant être relié par adhérence avec la machine électrique (5) par le biais de l'élément de commutation (4) et pouvant être démarré au moyen de la machine électrique (5), une séquence coordonnée de fonctions avec des états intermédiaires définis étant invoquée lors d'une demande de démarrage pour démarrer le moteur à combustion (3) avec la boîte de vitesses (7) interrompant la force de traction, un état de commutation de l'élément de commutation (4) étant modifié pour, au choix, une synchronisation purement électromotorisée ou combinée électromotorisée-motorisée à combustion d'une entrée de boîte de vitesses (6) de la boîte de vitesses (7) à une vitesse de rotation d'entrée de boîte de vitesses cible après le démarrage réussi du moteur, **caractérisé en ce qu'**un relâchement du couple dans la chaîne motrice (2) en vue de préparer un changement de rapport de démultiplication de la boîte de vitesses (7) lors d'un déplacement électrique est effectué avec une fermeture partielle temporaire de l'élément de commutation (4) ou assisté par une fermeture partielle temporaire de l'élément de commutation (4) et l'élément de commutation (4) est de nouveau ouvert après le relâchement réussi du couple.

2. Procédé selon la revendication 1, **caractérisé en ce que** pour démarrer le moteur à combustion (3), l'élément de commutation (4) est fermé et la synchronisation de l'entrée de boîte de vitesses (6) est effectuée conjointement par le biais du moteur à combustion (3) et de la machine électrique (5) après un démarrage réussi du moteur lorsque l'élément de commutation (4) est fermé.

3. Procédé selon les revendications 1 et 2, **caractérisé en ce que** lors d'une demande de démarrage pour démarrer le moteur à combustion (3) et d'une demande simultanée ou quasi-simultanée de changement de rapport de la boîte de vitesses (7) lors d'un déplacement électrique, la séquence de fonctions ci-après est prévue, avec une synchronisation de l'entrée de la boîte de vitesses (6) après un démarrage réussi du moteur lorsque l'élément de commutation (4) est fermé, un état intermédiaire défini étant atteint après chaque étape individuelle :
- relâchement du couple,
- vérification de l'ouverture de l'élément de commutation (4),
- désengagement du rapport initial lorsque l'élément de commutation (4) est ouvert,
- démarrage du moteur à combustion (3) au moyen d'un démarrage par inertie lorsque l'élément de commutation est fermé,
- synchronisation de l'entrée de la boîte de vitesses (6),
- engagement du rapport cible.

4. Procédé selon la revendication 1, **caractérisé en ce que** pour démarrer le moteur à combustion (3), l'élément de commutation (4) est fermé et il est de nouveau ouvert après un démarrage réussi du moteur, et **en ce que** la synchronisation de la boîte de vitesses (7) est effectuée au moyen de la machine électrique (5) lorsque l'élément de commutation (4) est ouvert.

5. Procédé selon les revendications 1 et 4, **caractérisé en ce que** lors d'une demande de démarrage pour démarrer le moteur à combustion (3) et d'une demande simultanée ou quasi-simultanée de changement de rapport de la boîte de vitesses (7) lors d'un déplacement électrique, la séquence de fonctions ci-après est prévue, avec une synchronisation de la boîte de vitesses (7) lorsque l'élément de commutation (4) est ouvert, un état intermédiaire défini étant atteint après chaque étape individuelle :
- relâchement du couple,
- vérification de l'ouverture de l'élément de commutation (4),
- désengagement du rapport initial lorsque l'élément de commutation (4) est ouvert,
- démarrage du moteur à combustion (3) au moyen d'un démarrage par inertie lorsque l'élément de commutation est fermé,
- ouverture de l'élément de commutation (4),
- synchronisation de l'entrée de la boîte de vitesses (6),
- engagement du rapport cible,
- fermeture de l'élément de commutation (4).

6. Procédé selon les revendications 1 et 4, **caractérisé en ce que** lors d'une demande de démarrage pour démarrer le moteur à combustion (3) lors d'un processus de mise en mouvement avec un véhicule immobilisé dans une position neutre de la boîte de vitesses, la séquence de fonctions ci-après est prévue, avec une synchronisation de la boîte de vitesses (7) lorsque l'élément de commutation (4) est ouvert, un état intermédiaire défini étant atteint après chaque étape individuelle :
- démarrage du moteur à combustion (3) au moyen d'un démarrage direct lorsque l'élément de commutation est fermé,
- ouverture de l'élément de commutation (4),
- synchronisation de l'entrée de la boîte de vitesses (6),
- engagement du rapport cible,
- fermeture de l'élément de commutation (4).

7. Procédé selon l'une des revendications 1 à 6, **caractérisé en ce que** lors d'un démarrage par inertie, une vitesse de rotation de démarrage minimale prédéfinie est tout d'abord réglée sur la machine électrique (5) lorsque l'élément de commutation (4) est ouvert ou une vitesse de rotation actuelle supérieure à la vitesse de rotation de démarrage minimale est maintenue, l'élément de commutation (4) est ensuite fermé et le moteur à combustion (3) est finalement démarré lorsque la vitesse de rotation de démarrage minimale est atteinte.

8. Procédé selon l'une des revendications 1 à 7, **caractérisé en ce que** lors d'un démarrage direct, l'élément de commutation (4) est fermé lorsque la machine électrique (5) est à l'arrêt ou tourne à une vitesse de rotation inférieure à une vitesse de rotation de démarrage minimale, le moteur à combustion (3) est ensuite accéléré à la vitesse de rotation de démarrage minimale définie par le biais de la machine électrique (5) lorsque l'élément de commutation (4) est fermé et le moteur à combustion (3) est finalement démarré lorsque la vitesse de rotation de démarrage minimale est atteinte.
